# EUROPÄISCHE PATENTSCHRIFT

(11) **EP 2 478 770 B1**
(45) Veröffentlichungstag und Bekanntmachung des Hinweises auf die Patenterteilung: **31.08.2016**
(21) Anmeldenummer: 11193325.5
(22) Anmeldetag: 13.12.2011
(51) Int. Cl.: A22B 3/06

(54) **VERFAHREN UND ANLAGE ZUM BETÄUBEN EINES SCHLACHTTIERES**
METHOD AND SYSTEM FOR ANAESTHETISING ANIMALS TO BE SLAUGHTERED
PROCÉDÉ ET INSTALLATION POUR ÉTOURDIR UN ANIMAL D'ABATTAGE

(30) Priorität: 21.12.2010 DE 102010061395
(43) Veröffentlichungstag der Anmeldung: 25.07.2012
(73) Patentinhaber: BANSS SCHLACHT- UND FÖRDERTECHNIK GMBH, 35216 Biedenkopf (DE)
(72) Erfinder: Koch, Jürgen, 35080 Bad Endbach (DE); Sawetzki, Markus, 35232 Dautphetal (DE)
(74) Vertreter: Stoffregen, Hans-Herbert

(56) Entgegenhaltungen:
- EP-A1- 0 570 279
- FR-A1- 2 784 545

## Beschreibung

Die Erfindung bezieht sich auf ein Verfahren zum Betäuben eines Schlachttieres, insbesondere eines Schweins, mittels in einem Bereich des Kopfs des Schlachttieres anzusetzender Elektroden, die zum Betäuben mit Spannung beaufschlagt werden, wobei das Schlachttier vor dem Betäuben fixiert wird und mittels einer Sensoreinrichtung der Bereich ermittelt wird und sodann die Elektroden an den Bereich angesetzt werden, siehe z.B FR-A-2 784 545. Ferner nimmt die Erfindung Bezug auf eine Anlage zum Betäuben eines Schlachttieres, insbesondere eines Schweins, umfassend eine Einrichtung zum Immobilisieren des Schlachttieres, seitlich am Kopf des Schlachttieres anzusetzende mit Spannung beaufschlagbare Elektroden sowie eine Sensoreinrichtung zur Ermittlung eines Bereichs des Kopfs, an den die Elektroden anzulegen sind.

Soll ein Schlachttier wie Schwein durch Elektroschock betäubt werden, wird es nach dem Stand der Technik in einen Restrainer getrieben. Bei einem Schwein kann sodann die Rüsselspitze mittels Lichtschranke erfasst werden, um in einem Abstand zur Rüsselspitze die Elektroden hinter den Ohren, insbesondere im hinteren Bereich der Backenknochen zu positionieren. Da Schweine unterschiedlich große, unterschiedlich dicke und unterschiedlich lange Rüssel aufweisen können, ist insoweit eine große Unsicherheit gegeben. Zudem ist nachteilig, dass die Rüsselspitze relativ weit vom Gelenk entfernt ist, um das der Kopf bewegbar ist, so dass der Bereich, an den die Elektroden zum schnellen und sicheren Betäuben anzulegen sind, häufig nicht hinreichend genau ermittelt werden kann.

Der DE-C-39 09 833 ist eine Betäubungsanlage für Schlachtvieh zu entnehmen, das durch einen Treibgang einer Betäubungsstation zugeführt wird. Diese weist zwei V-förmig zueinander angeordnete Förderbänder auf, über die das Schlachtvieh seitlich fixiert wird. Ferner ist ein Einlaufblech vorgesehen, das über Sensoren wie Lichtschranken in Förderrichtung schräg nach unten geklappt wird, so dass das Schwein seitlich auf den Förderbändern hängt und somit in relativ ruhiger Stellung zum Ende der Betäubungsstation gefördert wird. Mittels einer Bedienungsperson werden sodann zwei Elektroden im Augen-/Himbereich des Schlachttieres angelegt. Durch das manuelle Anlegen der Elektroden ist ein präzises Positionieren der Elektroden nicht sichergestellt. Auch ist der Durchsatz im Vergleich zu einer automatischen Betäubungsanlage relativ gering.

Zum Betäuben mittels mit einer Spannung von 90 V bis 120 V beaufschlagter Elektroden werden Schweine zum Immobilisieren in eine Betäubungsbucht getrieben, in der durch bewegliche Seitenwände das Schwein positioniert wird (DD-B-205 062).

Die DD-B-87 501 sieht ein Förderband als Treibgang vor, auf dem ein Schwein transportiert wird. Eine zum Förderband synchron mitlaufende Betäubungsgabel fällt lichtschrankengesteuert auf das Schwein herunter, um dieses zu betäuben.

Aus der DE-A-195 18 537 ist eine Vorrichtung zum elektrischen Betäuben von insbesondere Schweinen bekannt, die mit herabhängenden Beinen bäuchlings auf einer Auflage liegend immobilisiert sind. Entlang der Transportbahn befindet sich eine Lichtschranke. Erreicht ein Schwein mit seiner Schnauze die Lichtschranke, so wird hiervon ausgehend eine Position festgelegt, in der Elektroden zum Betäuben angelegt werden.

Der vorliegenden Erfindung liegt die Aufgabe zu Grunde, ein Verfahren und eine Anlage der eingangs genannten Art so weiterzubilden, dass ein präzises Positionieren der
Elektroden in einem gewünschten Bereich eines Schlachttieres erfolgt, und zwar unabhängig davon, wie groß das Schlachttier bzw. dessen Kopf ist.

Verfahrensmäßig wird die Aufgabe im Wesentlichen dadurch gelöst, dass mittels eines optischen Sensors der Sensoreinrichtung die Position der Ohren oder eines in Bezug auf die Ohren festgelegten Bezugspunktes ermittelt wird und in Abhängigkeit von der ermittelten Position die Elektroden an dem Bereich angelegt werden.

Erfindungsgemäß macht man sich die Kenntnis zu Nutze, dass man einen Bezugspunkt optisch erfasst, der in Bezug auf den Ort, wo die Elektroden anzulegen sind, einen im Wesentlichen gleichbleibenden Abstand unabhängig von der Größe des Kopfes des Schlachttieres aufweist. Bei einem Schwein ist man infolgedessen rüsselspitzenunabhängig, so dass unterschiedliche Formen des Rüssels nicht dazu führen, dass ein fehlerhaftes Anlegen der Elektroden erfolgt. Des Weiteren befinden sich die Ohren relativ nah am Gelenk des Kopfes, um das der Kopf bewegbar ist, so dass Bewegungen des Kopfes grundsätzlich nicht dazuführen, dass die Elektroden unpräzise angelegt werden.

Mit anderen Worten wird optisch ein Bereich erfasst, der präzise ermittelbar ist, nämlich die Ohren des Schlachttieres, so dass man wiederum überaus genau die Position errechnen kann, an der die Elektroden anzulegen sind. Dies ist insbesondere bei Schweinen der hintere Bereich der Backenknochen. An jeden dieser Bereiche wird sodann eine Elektrode angelegt. So können entsprechend dem Stand der Technik die Elektroden hydraulisch bzw. pneumatisch von unten in Richtung der Backenknochen herangefahren werden, wobei während des Anlegens ein synchrones Mitbewegen mit dem Transport des Schlachttieres erfolgt. Dieses ist während des Betäubens immobilisiert. Hierzu kann das Schlachttier in einer Betäubungsstation zwischen zwei V-förmig zueinander verlaufenden Förderbändern fixiert werden. Ergänzend oder alternativ kann das Schlachttier wie Schwein bäuchlings liegend auf einem Auflege-Transportband gefördert werden, zu dessen beiden Seiten die Beine des Schlachttiers herunter hängen.

Beim Anlegen der Elektroden wird die Bewegung des Schlachttieres mitberücksichtigt, so dass ein präzises Anlegen sichergestellt ist.

Der optische Sensor selbst kann gegenüber dem geförderten Schlachttier stationär angeordnet werden.

Um eine präzise Ermittlung des Bereichs sicherzustellen, wird mittels einer Bildverarbeitung aus dem von dem Schlachttierkopf aufgenommenen Bild zumindest ein Parameter aus der Gruppe Lage der Ohrenansätze, Abstand der Ohren, Anfang der Ohrenansätze, Ende der Ohrenansätze ausgewählt, um sodann unter Berücksichtigung von in einem Rechner abgelegten Daten den bzw. die Bereiche am Kopf zu berechnen, an den die Elektrode bzw. an die die Elektroden anzulegen sind. Die Daten werden einer Steuerung zugeführt, mittels der die Elektroden in Richtung des Schlachttieres verstellt werden, um sodann automatisch an diesem zum Anliegen zu kommen.

Mit dem optischen Sensor wie der Kamera und der Bildverarbeitung ist es nur erforderlich, x-, y -Koordinaten zu ermitteln, da sich der Kopf des Schlachttieres aufgrund der Immobilisierung des Schlachttieres in einer bekannten Ebene bzw. in einem Bereich einer Ebene befindet, die von den x-, γ-Achsen aufgespannt wird. Aufgrund des für die Berechnung gewählten Ausgangspunkts, nämlich der Ohren oder einer diesen zugeordneten Position, die sich im Bereich des Gelenks befindet, um das sich der Kopf des Schlachttieres bewegt, können die berechneten Werte von Kopfbewegungen nicht derart beeinflusst werden, dass die Elektroden in einem Bereich angelegt werden, in dem ein ordnungsgemäßes Betäuben nicht erfolgen kann.

Eine Anlage zum Betäuben eines Schlachttieres, umfassend eine Einrichtung zum zumindest seitlichen Fixieren des Schlachttiers, seitlich am Kopf des Schlachttieres anzusetzenden und mit Spannung beaufschlagbaren Elektroden sowie eine Sensoreinrichtung zur Ermittlung eines Bereichs des Kopfes, zeichnet sich dadurch aus, dass die Sensoreinrichtung einen optischen Sensor mit Bildverarbeitung umfasst, dass mittels des optischen Sensors die Position der Ohren des Schlachttieres oder eines den Ohren zugeordneten Bezugspunkts ermittelbar ist und dass in Abhängigkeit von der ermittelten Position die Bewegung der Elektroden zum Anlegen an den Kopf steuerbar ist. Dabei ist das Schlachttier während der Ermittlung der Position und dem Anlegen der Elektroden von einem Förderer aufgenommen, zu dem der optische Sensor wie Kamera insbesondere stationär angeordnet ist. Die Elektroden werden synchron mit der Förderung des Schlachttiers mitbewegt, so dass über eine gewünschte Zeitdauer ein Anliegen gewährleistet ist.

Weitere Einzelheiten, Vorteile und Merkmale der Erfindung ergeben sich nicht nur aus den Ansprüchen, den diesen zu entnehmenden Merkmalen - für sich und/oder in Kombination -, sondern auch aus der nachfolgenden Beschreibung eines der Zeichnung zu entnehmenden bevorzugten Ausführungsbeispiels.

Es zeigen:

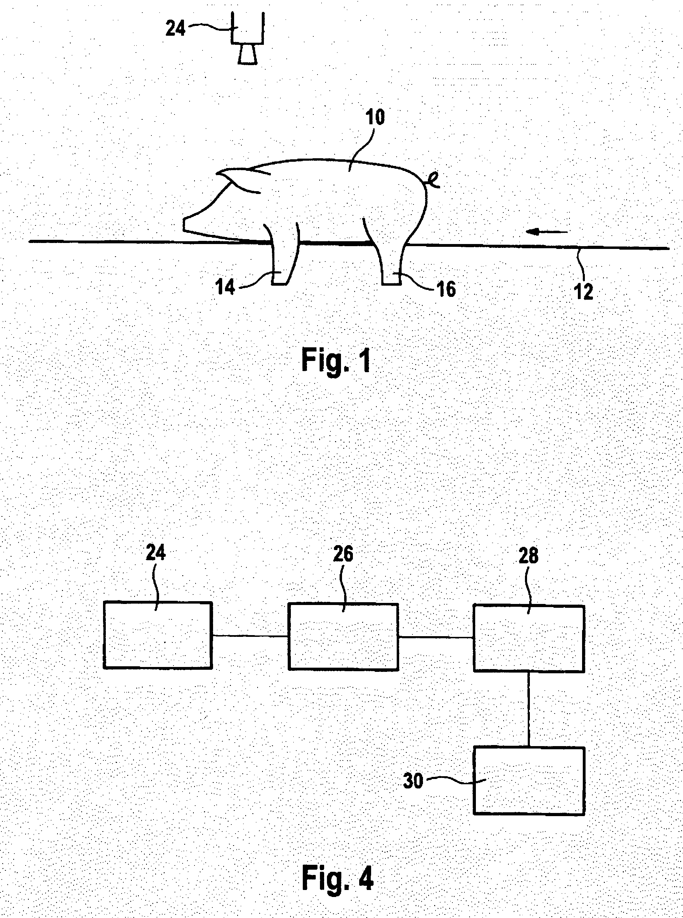

- Fig. 1: eine Prinzipdarstellung eines immobilisierten Schlachttiers in Form eines Schweins,

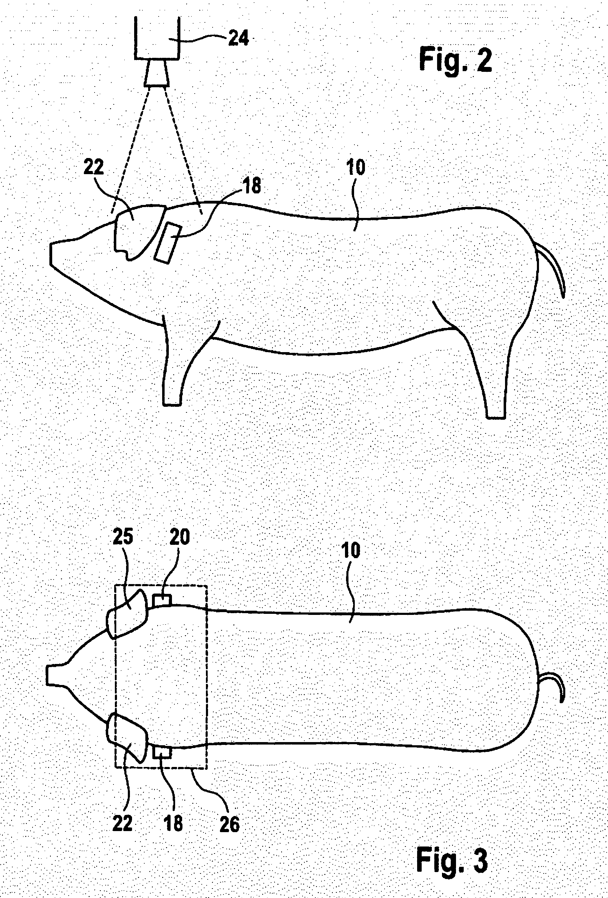

- Fig. 2: das Schwein gemäß Fig. 1 mit angelegten Elektroden,
- Fig. 3: das Schwein gemäß Fig. 2 in Draufsicht und
- Fig. 4: ein Blockschaltbild.

In den Figuren, in denen gleiche Elemente mit gleichen Bezugszeichen versehen sind, ist als ein nicht einschränkendes Beispiel für ein Schlachttier ein Schwein 10 gezeichnet, das durch Elektroschock betäubt werden soll. Hierzu wird das Schwein 10 in bekannter Weise zunächst immobilisiert, um einer Betäubungsstation zugeführt zu werden.

Zum Immobilisieren wird das Schwein 10 hängend auf einem Transportband 12 gefördert, so dass die Beine 14, 16 des Schweins 10 zu beiden Seiten des Transportbandes 12 herabhängen. Zusätzlich können nicht dargestellte seitliche Transportbänder benutzt werden, die einen V-förmigen Raum begrenzen und zwischen denen das Schwein 10 fixiert ist. Durch diese Maßnahmen wird das Schwein immobilisiert, um sodann in einer Betäubungsstation, die einem Bereich des Transportweges des Schweins 10 entspricht, Elektroden an das Schwein 10 anzulegen, und zwar in einem Bereich, in dem ein sicheres Betäuben erfolgen kann. Dies ist bei Schweinen üblicherweise der hintere Bereich der Backenknochen, also ein Bereich seitlich unterhalb der Ohren 22, 25 des Schweins 10. Hierzu erfolgt mittels einer Kamera 24 ein optisches Erfassen eines Bereichs 26 des Kopfs, in dem die Ohren 22, 24 vorhanden sind. Mittels einer an die Kamera 24 angeschlossene Bildverarbeitung 26 wird sodann die Position der Ohren 22, 25 koordinatenmäßig ermittelt, um sodann in einem Rechner die Position zu berechnen, an die die Elektroden 18, 20 an das Schwein, also dessen hinteren Backenknochen anzulegen sind. Die Daten werden einer Steuerung 28 zugeführt, über die Antriebe 30 für die Elektroden 18, 20 angesteuert werden, um mittels einer Positioniereinheit in Richtung des Schweins 10 zum Anlegen an den hinteren Bereich der Backenknochen verstellt zu werden. Sodann erfolgt ein synchrones Mitbewegen der Elektroden 18, 20 mit dem Transport des Schweins 10 bei gleichzeitigem Anlegen einer Spannung an die Elektroden 18, 20. Nach einer vorgegebenen Zeit, innerhalb der das Schwein 10 durch das Fließen des Stroms über die Elektroden 18, 20 sicher betäubt ist, werden die Elektroden 18, 20 in ihre Ausgangsposition zurückgefahren, um sodann an ein nachfolgendes Schwein 10 angelegt zu werden.

Mittels der Bildverarbeitung werden die x-, γ-Koordinaten der Ohren 22, 25 bzw. eines Bezugspunkts zu diesen ermittelt, ohne dass es einer Abstandskoordinate z zu der Kamera 24 bedarf, da das Schwein 10 immobilisiert ist und somit dem Grunde nach eine Messergebnisse merklich beeinflussende Bewegung des Kopfes in Richtung der Kamera nicht erfolgt. Zudem liegt das Gelenk, um das der Kopf bewegt wird, nahe an den Ohren 22, 25 bzw. dem Bezugspunkt.

## Patentansprüche

1. Verfahren zum Betäuben eines Schlachttieres (10), insbesondere eines Schweins, mittels in einem Bereich des Kopfes des Schlachttieres anzusetzender Elektroden (18, 20), die zum Betäuben mit Spannung beaufschlagt werden, wobei das Schlachttier vor dem Betäuben fixiert wird und mittels einer Sensoreinrichtung der Bereich ermittelt und sodann die Elektroden an den Bereich angesetzt werden,
**dadurch gekennzeichnet,**
**dass** mittels eines optischen Sensors (24) der Sensoreinrichtung die Position der Ohren (22, 24) des Schlachttieres (10) oder zumindest eines in Bezug auf die Ohren ausgewählten Bezugspunkts ermittelt wird und dass in Abhängigkeit der durch Bildverarbeitung ermittelten Position der Bereich ermittelt wird, an den die Elektroden angelegt werden.

2. Verfahren nach Anspruch 1,
**dadurch gekennzeichnet,**
**dass** das Schlachttier (10) während des Anlegens der Elektroden (18, 20) transportiert wird, wobei die Elektroden während des Transports des Schlachttieres unter Berücksichtigung der Fördergeschwindigkeit des Schlachttieres an dieses angelegt werden.

3. Verfahren nach Anspruch 1 oder 2,
**dadurch gekennzeichnet,**
**dass** der optische Sensor (24) wie Kamera gegenüber dem geförderten Schlachttier (10) stationär angeordnet wird.

4. Verfahren nach zumindest einem der vorhergehenden Ansprüche,
**dadurch gekennzeichnet,**
**dass** zur Ermittlung des Bereichs, an den die Elektroden (18, 20) angesetzt werden, zumindest ein Parameter aus der Gruppe Lage der Ohrenansätze, Abstand der Ohren (18, 20), Anfang des Ohrenansatzes, Ende des Ohrenansatzes ausgewählt wird.

5. Anlage zum Betäuben eines Schlachttieres (10), insbesondere eines Schweins, umfassend eine Einrichtung zum Immobilisieren des Schlachttieres, seitlich an den Kopf des Schlachttieres anzusetzende und mit Spannung beaufschlagbare Elektroden (18, 20) sowie eine Sensoreinrichtung (24) zur Ermittlung eines Bereichs des Kopfs,
**dadurch gekennzeichnet,**
**dass** die Sensoreinrichtung einen optischen Sensor (24) mit Bildverarbeitung (26) umfasst, dass mittels des optischen Sensors die Position der Ohren (22, 24) des Schlachttieres (10) oder eines den Ohren zugeordneten Bezugspunkts ermittelbar ist, und dass in Abhängigkeit von der ermittelten Position die Bewegung der Elektroden (18, 20) zum Anlegen an den Kopf des Schlachttieres steuerbar ist.

6. Anlage nach Anspruch 5,
**dadurch gekennzeichnet,**
**dass** das Schlachttier (10) während der Ermittlung der Position und dem Anlegen der Elektroden (18, 20) von einem Förderer (12) aufgenommen ist, zu dem der optische Sensor (24) wie Kamera stationär angeordnet ist.

## Claims

1. Method for stunning an animal to be slaughtered (10), in particular a pig, by means of electrodes (18, 20) to be attached to an area of the head of said animal and that are supplied with a voltage to stun it, where said animal is restrained before being stunned and where said area is determined by means of a sensor device and the electrodes are then attached in that area,
wherein
the position of the ears (22, 24) of the animal to be slaughtered (10) or at least of a reference point selected with reference to the ears is determined by means of an optical sensor (24) of the sensor device and the area to which the electrodes are attached is determined depending on the position determined by image processing.

2. Method according to claim 1,
wherein
the animal to be slaughtered (10) is transported during attachment of the electrodes (18, 20), where said electrodes are attached to said animal during its transport taking into account the conveying speed of said animal.

3. Method according to claim 1 or 2,
wherein
the optical sensor (24) such as a camera is arranged stationary opposite the conveyed animal to be slaughtered (10).

4. Method according to at least one of the preceding claims,
wherein
to determine the area to which the electrodes (18, 20) are attached at least one parameter is selected from the group: positions of ear bases, distance between ears (18, 20), start of ear base, end of ear base.

5. Facility for stunning an animal to be slaughtered (10), in particular a pig, comprising a device for immobilizing said animal, electrodes (18, 20) to be attached to the side of the head of said animal and supplied with voltage, and a sensor device (24) for determining an area of the head,
wherein
the sensor device comprises an optical sensor (24) with image processing (26), the positions of the ears (22, 25) of the animal to be slaughtered (10) or of a reference point associated with the ears can be determined by means of said optical sensor, and the movement of the electrodes (18, 20) for attachment to the head of said animal can be controlled depending on the position determined.

6. Facility according to claim 5,
wherein
the animal to be slaughtered (10) is held by a conveyor (12) during determination of the position and attachment of the electrodes (18, 20), to which conveyor the optical sensor (24) such as a camera is arranged stationary.

## Revendications

1. Procédé pour anesthésier un animal de boucherie (10), en particulier un porc, au moyen d'électrodes (18, 20) à appliquer sur une zone de la tête de l'animal de boucherie, lesquelles sont mises sous tension pour réaliser l'anesthésie, sachant que l'animal de boucherie est immobilisé avant l'anesthésie, que ladite zone est déterminée par un dispositif détecteur, puis que les électrodes sont appliquées sur ladite zone,
**caractérisé en ce**
**qu'**au moyen d'un capteur optique (24) du dispositif détecteur est déterminée la position des oreilles (22, 24) de l'animal de boucherie (10) ou d'au moins un point de référence choisi en référence aux oreilles, et qu'en fonction de la position déterminée par traitement d'images est déterminée la zone sur laquelle les électrodes seront appliquées.

2. Procédé selon la revendication 1,
**caractérisé en ce**
**que** l'animal de boucherie (10) est transporté pendant l'application des électrodes (18, 20), sachant que pendant le transport de l'animal de boucherie, les électrodes sont appliquées sur l'animal de boucherie en tenant compte de la vitesse de transport dudit animal de boucherie.

3. Procédé selon la revendication 1 ou 2,
**caractérisé en ce**
**que** le capteur optique (24), tel qu'une caméra, est placé de manière stationnaire du côté opposé de l'animal de boucherie (10) transporté.

4. Procédé selon au moins une des revendications précédentes,
**caractérisé en ce**
**que** pour déterminer la zone sur laquelle les électrodes (18, 20) seront appliquées, est sélectionné au moins un paramètre du groupe : position des bases des oreilles, distance entre les oreilles (18, 20), début de la base de l'oreille, fin de la base de l'oreille.

5. Installation pour anesthésier un animal de boucherie (10), en particulier un porc, comprenant un dispositif pour immobiliser l'animal de boucherie, des électrodes (18, 20) à appliquer latéralement sur la tête de l'animal de boucherie et pouvant être mises sous tension, ainsi qu'un dispositif détecteur (24) pour déterminer une zone de la tête,
**caractérisée en ce**
**que** le dispositif détecteur comprend un capteur optique (24) avec traitement d'images (26), qu'au moyen du capteur optique peut être déterminé(e) la position des oreilles (22, 24) de l'animal de boucherie (10) ou un point de référence associé aux oreilles, et que le mouvement des électrodes (18, 20) pour application sur la tête de l'animal de boucherie peut être commandé en fonction de la position déterminée.

6. Installation selon la revendication 5,
**caractérisée en ce**
**que** pendant la détermination de la position et l'application des électrodes (18, 20), l'animal de boucherie (10) est pris en charge par un convoyeur (12) par rapport auquel le capteur optique (24), tel qu'une caméra, est placé de manière stationnaire.
